# EUROPEAN PATENT SPECIFICATION

(11) **EP 4 156 923 B1**
(45) Date of publication and mention of the grant of the patent: **02.12.2026**
(21) Application number: 21729049.3
(22) Date of filing: 25.05.2021
(51) Int. Cl.: A01M 7/00

(54) **SPRAY DEVICE FOR SPRAYING LIQUID ON CROPS**
SPRITZEINRICHTUNG ZUM VERSPRÜHEN VON FLÜSSIGKEITEN AUF FELDFRÜCHTE
PULVÉRISATEUR POUR DISTRIBUER DES LIQUIDES SUR DES CULTURES DE CHAMPS

(30) Priority: 26.05.2020 NL 2025672
(43) Date of publication of application: 05.04.2023
(73) Proprietor: Wingssprayer B.V., 6031 RV Nederweert (NL)
(72) Inventor: Hoeben, Henricus Johannes Godefridus Maria, 6026 RH Maarheeze (NL); Hoeben, John Leonardus Karel Anna, 6035 RJ Ospeldijk (NL); Hoeben, Robertus Matheus Anna, 6035 PV Ospel (NL)
(74) Representative: Patentwerk B.V.
(86) International application number: PCT/NL2021/050326
(87) International publication number: WO 2021/242093

(56) References cited:
- WO-A1-2017/179973
- WO-A2-2012/005586
- WO-A2-2012/108771
- GB-A- 2 273 028
- US-A- 5 062 572
- US-B1- 9 572 308

## Description

### Technical field of the invention

The invention relates to a spraying device for coupling to an elongated boom present on an agricultural tractor for spraying liquid onto crops, comprising:
- an elongated first blade, configured to be connected to the boom thereby being pivotable about a first pivot axis parallel to the longitudinal direction of the first blade, the boom during spraying of liquid to the crops, extending in longitudinal direction perpendicular to the direction of movement of the agricultural tractor, the first blade being longitudinally parallel to the boom,
- a number of nozzles, which are connected to the first blade and are directed in a direction transverse to the longitudinal direction of the first blade and opposite to the direction of travel during spraying, and
- an elongated second blade longitudinally parallel to the longitudinal direction of the first blade and spaced from and connected to the first blade, which second blade is pivotable about the first pivot axis and/or a second pivot axis parallel to the first pivot axis, and which second blade is pivotable independently of the first blade.

The first and second blade being pivotably connected and being pivotable about an pivot axis can be understood to mean that the blades are connected to the boom and/or to each other via a hinge (for example a hinge provided with a mechanical hinge axis or a flexible hinge made of plastic), but also that the blades are connected to the boom and/or to each other via a bendable (plastic) strip, the pivot axis being present, for example, at the location of the attachment of this bendable strip to the boom or to one of the blades.

### Background of the invention

A spraying device according to the preamble of claim 1 is known from GB2273028A. In this known spraying device, the two blades are directly hingedly attached to the boom and extend downwardly from the boom. The nozzles are also attached directly to the boom and are directed vertically downwards. The blades serve to shield the nozzles while driving so that less spray liquid is blown away.

### Summary of the invention

An object of the invention is to improve the known spraying device. More in particular, the object of the invention is to provide a spraying device of the type mentioned in the preamble, wherein the blades direct the air past the nozzles so that even less spray liquid is blown away and the spray liquid is guided even better to the crop to be sprayed than is the case with the known spraying device. To this end, the spraying device according to the invention is characterized in that that the spraying device comprises an elongated third blade, which is longitudinally parallel to the longitudinal direction of the first blade and is spaced from the first blade and is connected to the first blade, the third blade being not pivotable with respect to the first blade. During operation, depending on the circumstances (wind speed and travel speed), the second blade adjusts its position relative to the first blade, whereby the air flow above the nozzles better directs the spray liquid to the crop. As a result, the spray liquid coming from the nozzles is better directed to the crops. During operation, that is to say during the advance of the spraying device, the air flow deflected by the second blade will better guide the spray liquid sprayed from the nozzles to the crops because the degree of deflection and thus control of the air flow through the second blade is dependent on the position of the spraying device, which position is determined by the wind and driving speed. The possible adverse effects of wind and ground speed on the direction of the air flow along the second blade are compensated by the adjustment of the position of the second blade by the driving wind flowing against it. It is noted that the position of the second blade can also be adjusted by a mechanical adjustment device instead of the position of the second blade being determined only by the air flow along the blade caused by the wind and speed of travel.

The third blade, together with the first blade, is pivotable about the first pivot axis, but the third blade is not, independently of the first blade, pivotable about the first pivot axis.

Preferably, the sprayer device comprises an elongate suspension element, which is longitudinally parallel to the longitudinal direction of the first blade, and which is pivotally connected about the first pivot axis to the elongate boom of the agricultural tractor, the first blade being attached to the suspension element and the second blade being pivotally connected to the suspension element. Preferably, the third blade is also attached to the suspension element.

The first blade via one or more first blade supports is attached to the suspension element and the second blade is preferably pivotally connected to the suspension element via one or more second blade supports.

A further embodiment of the spraying device according to the invention is characterized in that the spraying device is provided with at least one first stop which limits rotation of the second blade about the first or second pivot axis in a direction towards the first blade.

The spraying device is preferably provided with at least one fastening element for fastening the spraying device to the boom present on the agricultural tractor, the suspension element being pivotably connected to the fastening element, which fastening element is provided with at least one second stop which limits rotation of the suspension element.

Each second blade support is preferably provided with a contact part which, upon rotation of the second blade in a direction away from the first blade, comes into contact with the stop, so that rotation in that direction is limited.

Preferably, the third blade is also attached to the suspension element via one or more third nozzle carriers.

### Brief description of the drawings

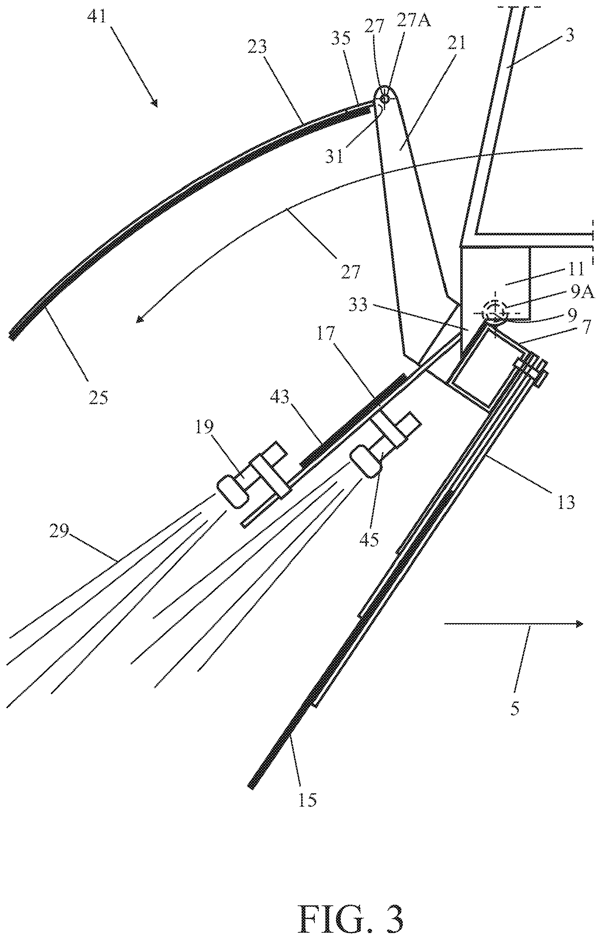

The invention will be further elucidated below on the basis of exemplary embodiments of the spraying device wherein the invention is shown in figure 3 In the drawings:
Figure 1 is an embodiment of the spraying device in side view;
Figure 2 is a part of the spraying device shown in figure 1 in top view; and
Figure 3 is the embodiment of the spraying device according to the invention in side view.

### Detailed description of the drawings

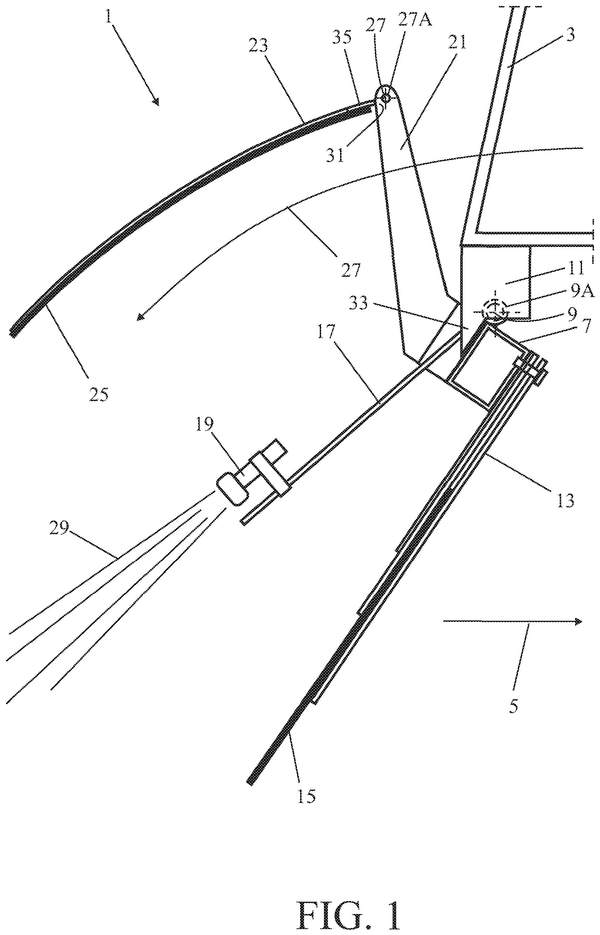

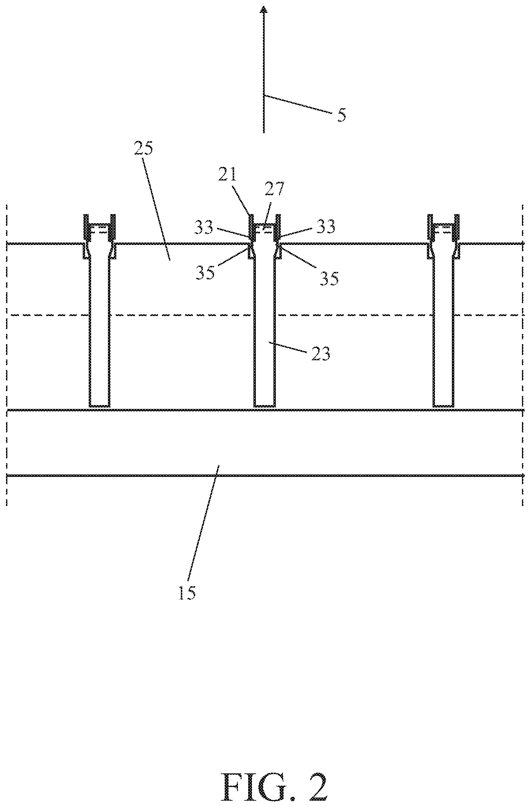

Figures 1 and 2 show an embodiment of the spraying device 1 for spraying spraying liquid on crops in side view and top view, respectively. The spraying device 1 is hingedly connected to a boom 3 present on an agricultural tractor. During the spraying of liquid onto crops, the agricultural tractor moves over the crops and the boom 3 extends horizontally in the longitudinal direction and at right angles to the direction of movement 5 of the agricultural tractor.

The spraying device 1 has an elongated suspension element 7 which is connected via hinges 9 to fastening elements 11 with which the spraying device is attached to the boom 3. A number of first blade carriers 13 are attached to the suspension element 7, to which an elongated first blade 15 is attached. The first blade 15 is longitudinally parallel to the longitudinal direction of the boom 3. Nozzle carriers 17 are also attached to the suspension element 7 and are spaced from the first blade carriers 13. Nozzles 19 for spraying the spray liquid onto crops are present on these nozzle carriers 17.

Furthermore, a number of brackets 21 are attached to the suspension element 7 to which brackets second blade supports 23 are hingedly connected. An elongated second blade 25 is attached to these second blade supports, which second blade is also longitudinally parallel to the longitudinal direction of the suspension element 7. The second blade supports 23 are connected to the brackets 21 via second hinges 27. The second blade 25 is, seen in side view, slightly curved and connected to the first blade 15 only via the second hinges, so that the second blade 25 is pivotable completely independently of the first blade 15.

During spraying, the second blade 25 is present above the first blade 15 and the second blade 25 deflects the driving wind downwards, creating an air flow 27 above the spray jets 29 which ensures that the spray liquid does not blow away but ends up on the crops.

Parts of the brackets 21 form first stops 31 with which protrusions 35 on the second blade supports 23 come into contact when the second blade 25 is rotated toward the first blade 15. This prevents the second blade 25 from deflecting the air flow too much downwards at a low driving wind speed.

The fastening elements 11 are provided with a number of second stops 33 which limit the rotation of the suspension element 7 and thus also that of the first blade 15. As a result, the first blade 15 remains obliquely downwards even at high wind speeds.

Figure 3 shows the embodiment of the spraying device 41 according to the invention in side view. All parts identical to those of the first embodiment are designated with the same reference numerals. This spraying device 41 further has a third blade 43 attached to the nozzle carriers 17 as well as further spray nozzles 45 which are also attached to the nozzle carriers 17. These further nozzles 45 blow air during spraying in order to better guide the spray liquid from the nozzles 19 to the crops. These further nozzles 45 are directed in the same direction as the nozzles 19 and are present on the side of the third blade 43 facing the first blade 15.

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. Spraying device (41) for coupling to an elongated boom present on an agricultural tractor for spraying liquid onto crops, comprising:
- an elongated first blade (15), configured to be connected to the boom (3) thereby being pivotable about a first pivot axis (9) parallel to the longitudinal direction of the first blade (15), the boom (3) during spraying of liquid to the crops, extending in longitudinal direction perpendicular to the direction of movement (5) of the agricultural tractor, the first blade (15) being longitudinally parallel to the boom (3),
- a number of nozzles (19), which are connected to the first blade (15) and are directed in a direction transverse to the longitudinal direction of the first blade and opposite to the direction of travel (5) during spraying, and
- an elongated second blade (25) longitudinally parallel to the longitudinal direction of the first blade (15) and spaced from and connected to the first blade (15), which second blade (25) is pivotable about the first pivot axis (9) and/or a second pivot axis (27) parallel to the first pivot axis (9), and which second blade is pivotable independently of the first blade (15),
**characterized in that** the spraying device (41) comprises an elongated third blade (43) being longitudinally parallel to the longitudinal direction of the first blade (15) and being spaced from the first blade and being connected to the first blade (15), the third blade (43) being non-rotatable relative to the first blade (15).

2. Spraying device (41) according to claim 1, **characterized in that** it comprises an elongated suspension element (7) which is longitudinally parallel to the longitudinal direction of the first blade (15), and which can be pivotably connected to the elongated boom (3) thereby being pivotable about the first pivot axis (9), the first blade (15) being rigidly connected to the suspension element (7) and the second blade (25) is pivotably connected to the suspension element (7).

3. Spraying device (41) according to claim 2, **characterized in that** the third blade (43) is attached to the suspension element (7).

4. Spraying device (41) according to claim 2 or 3, **characterized in that** the first blade (15) via one or more first blade supports (13) is attached to the suspension element (7).

5. Spraying device (41) according to claim 2, 3 or 4, **characterized in that** the second blade (25) is pivotably connected to the suspension element (7) via one or more second blade supports (23).

6. Spraying device (41) according to any one of the preceding claims 2-5, **characterized in that** the spraying device (41) is provided with at least one first stop (31) which prevents rotation of the second blade (25) about the first or second pivot axis (9, 27) in a direction towards the first blade (15).

7. Spraying device (41) according to claim 6, **characterized in that** the spraying device (41) is provided with at least one fastening element (11) for fastening the spraying device to the boom (3) present on the agricultural tractor, wherein the suspension element (7) is pivotally connected to the fastening element (11), which fastening element is provided with at least one second stop (33) which limits rotation of the suspension element (7).

8. Spraying device (41) according to claims 5 and 6, **characterized in that** each second blade support (23) is provided with a contact part (35) which, when the second blade (25) is turned in a direction away of the first blade (15), comes into contact with the first stop (31) so that rotation **in that** direction is limited.

9. Spraying device (41) according to any one of the preceding claims 2-8, **characterized in that** the third blade (43) is attached to the connecting suspension element (7) via nozzle carriers (17).

## Patentansprüche

1. Spritzvorrichtung (41) zum Ankoppeln an ein langgestrecktes, an einem landwirtschaftlichen Traktor befindliches Gestänge, zum Spritzen von Flüssigkeit auf Kulturpflanzen, umfassend:
- ein langgestrecktes erstes Blatt (15), das dazu ausgebildet ist, mit dem Gestänge (3) verbunden zu werden, wodurch es um eine zur Längsrichtung des ersten Blattes (15) parallele erste Schwenkachse (9) schwenkbar ist, wobei sich das Gestänge (3) während des Spritzens von Flüssigkeit auf die Kulturpflanzen in Längsrichtung senkrecht zur Bewegungsrichtung (5) des landwirtschaftlichen Traktors erstreckt, wobei das erste Blatt (15) in Längsrichtung parallel zum Gestänge (3) ist,
- eine Anzahl von Düsen (19), die mit dem ersten Blatt (15) verbunden sind und die während des Spritzens in einer Richtung quer zur Längsrichtung des ersten Blattes und entgegengesetzt zur Fahrtrichtung (5) gerichtet sind, und
- ein langgestrecktes zweites Blatt (25), das in Längsrichtung parallel zur Längsrichtung des ersten Blattes (15) ist und das von dem ersten Blatt (15) beabstandet und mit diesem verbunden ist, wobei das zweite Blatt (25) um die erste Schwenkachse (9) und/oder eine zur ersten Schwenkachse (9) parallele zweite Schwenkachse (27) schwenkbar ist und wobei das zweite Blatt unabhängig vom ersten Blatt (15) schwenkbar ist, **dadurch gekennzeichnet, dass** die Spritzvorrichtung (41) ein langgestrecktes drittes Blatt (43) umfasst, das in Längsrichtung parallel zur Längsrichtung des ersten Blattes (15) ist, das von dem ersten Blatt beabstandet ist und das mit dem ersten Blatt (15) verbunden ist, wobei das dritte Blatt (43) relativ zum ersten Blatt (15) nicht drehbar ist.

2. Spritzvorrichtung (41) nach Anspruch 1, **dadurch gekennzeichnet, dass** sie ein langgestrecktes Aufhängeelement (7) umfasst, das in Längsrichtung parallel zur Längsrichtung des ersten Blattes (15) ist und das schwenkbar mit dem langgestreckten Gestänge (3) verbunden werden kann, wodurch es um die erste Schwenkachse (9) schwenkbar ist, wobei das erste Blatt (15) starr mit dem Aufhängeelement (7) verbunden ist und das zweite Blatt (25) schwenkbar mit dem Aufhängeelement (7) verbunden ist.

3. Spritzvorrichtung (41) nach Anspruch 2, **dadurch gekennzeichnet, dass** das dritte Blatt (43) am Aufhängeelement (7) befestigt ist.

4. Spritzvorrichtung (41) nach Anspruch 2 oder 3, **dadurch gekennzeichnet, dass** das erste Blatt (15) über einen oder mehrere erste Blattträger (13) am Aufhängeelement (7) befestigt ist.

5. Spritzvorrichtung (41) nach Anspruch 2, 3 oder 4, **dadurch gekennzeichnet, dass** das zweite Blatt (25) über einen oder mehrere zweite Blattträger (23) schwenkbar mit dem Aufhängeelement (7) verbunden ist.

6. Spritzvorrichtung (41) nach einem der vorhergehenden Ansprüche 2-5, **dadurch gekennzeichnet, dass** die Spritzvorrichtung (41) mit mindestens einem ersten Anschlag (31) versehen ist, der eine Drehung des zweiten Blattes (25) um die erste oder zweite Schwenkachse (9, 27) in einer Richtung zum ersten Blatt (15) hin verhindert.

7. Spritzvorrichtung (41) nach Anspruch 6, **dadurch gekennzeichnet, dass** die Spritzvorrichtung (41) mit mindestens einem Befestigungselement (11) zum Befestigen der Spritzvorrichtung an dem am landwirtschaftlichen Traktor befindlichen Gestänge (3) versehen ist, wobei das Aufhängeelement (7) schwenkbar mit dem Befestigungselement (11) verbunden ist, welches Befestigungselement mit mindestens einem zweiten Anschlag (33) versehen ist, der eine Drehung des Aufhängeelements (7) begrenzt.

8. Spritzvorrichtung (41) nach den Ansprüchen 5 und 6, **dadurch gekennzeichnet, dass** jeder der zweiten Blattträger (23) mit einem Kontaktteil (35) versehen ist, das, wenn das zweite Blatt (25) in einer Richtung von dem ersten Blatt (15) weg gedreht wird, mit dem ersten Anschlag (31) in Kontakt kommt, so dass die Drehung in dieser Richtung begrenzt wird.

9. Spritzvorrichtung (41) nach einem der vorhergehenden Ansprüche 2-8, **dadurch gekennzeichnet, dass** das dritte Blatt (43) über Düsenträger (17) an dem verbindenden Aufhängeelement (7) befestigt ist.

## Revendications

1. Dispositif de pulvérisation (41) destiné à être accouplé à une rampe allongée présente sur un tracteur agricole pour pulvériser un liquide sur des cultures, comprenant :
- une première lame allongée (15), configurée pour être reliée à la rampe (3), en étant ainsi apte à pivoter autour d'un premier axe de pivotement (9) parallèle à la direction longitudinale de la première lame (15), la rampe (3), pendant la pulvérisation de liquide sur les cultures, s'étendant en direction longitudinale perpendiculaire à la direction de déplacement (5) du tracteur agricole, la première lame (15) étant longitudinalement parallèle à la rampe (3),
- un certain nombre de buses (19), qui sont reliées à la première lame (15) et sont orientées dans une direction transversale à la direction longitudinale de la première lame et opposée à la direction d'avancement (5) pendant la pulvérisation, et
- une deuxième lame allongée (25) longitudinalement parallèle à la direction longitudinale de la première lame (15), espacée de la première lame (15) et reliée à celle-ci, laquelle deuxième lame (25) est apte à pivoter autour du premier axe de pivotement (9) et/ou d'un deuxième axe de pivotement (27) parallèle au premier axe de pivotement (9), et laquelle deuxième lame est apte à pivoter indépendamment de la première lame (15), **caractérisé en ce que** le dispositif de pulvérisation (41) comprend une troisième lame allongée (43) qui est longitudinalement parallèle à la direction longitudinale de la première lame (15), qui est espacée de la première lame et qui est reliée à la première lame (15), la troisième lame (43) n'étant pas rotative par rapport à la première lame (15).

2. Dispositif de pulvérisation (41) selon la revendication 1, **caractérisé en ce qu'**il comprend un élément de suspension allongé (7) qui est longitudinalement parallèle à la direction longitudinale de la première lame (15), et qui peut être relié de manière pivotante à la rampe allongée (3), en étant ainsi apte à pivoter autour du premier axe de pivotement (9), la première lame (15) étant reliée de manière rigide à l'élément de suspension (7) et la deuxième lame (25) étant reliée de manière pivotante à l'élément de suspension (7).

3. Dispositif de pulvérisation (41) selon la revendication 2, **caractérisé en ce que** la troisième lame (43) est fixée à l'élément de suspension (7).

4. Dispositif de pulvérisation (41) selon la revendication 2 ou 3, **caractérisé en ce que** la première lame (15) est fixée à l'élément de suspension (7) par l'intermédiaire d'un ou de plusieurs supports (13) de la première lame.

5. Dispositif de pulvérisation (41) selon la revendication 2, 3 ou 4, **caractérisé en ce que** la deuxième lame (25) est reliée de manière pivotante à l'élément de suspension (7) par l'intermédiaire d'un ou de plusieurs supports (23) de la deuxième lame.

6. Dispositif de pulvérisation (41) selon l'une quelconque des revendications précédentes 2-5, **caractérisé en ce que** le dispositif de pulvérisation (41) est pourvu d'au moins une première butée (31) qui empêche la rotation de la deuxième lame (25) autour du premier ou du deuxième axe de pivotement (9, 27) dans une direction se rapprochant de la première lame (15).

7. Dispositif de pulvérisation (41) selon la revendication 6, **caractérisé en ce que** le dispositif de pulvérisation (41) est pourvu d'au moins un élément de fixation (11) pour fixer le dispositif de pulvérisation à la rampe (3) présente sur le tracteur agricole, l'élément de suspension (7) étant relié de manière pivotante à l'élément de fixation (11), lequel élément de fixation est pourvu d'au moins une deuxième butée (33) qui limite la rotation de l'élément de suspension (7).

8. Dispositif de pulvérisation (41) selon les revendications 5 et 6, **caractérisé en ce que** chaque support (23) de la deuxième lame est pourvu d'une partie de contact (35) qui, lorsque la deuxième lame (25) est tournée dans une direction s'éloignant de la première lame (15), vient en contact avec la première butée (31) de sorte que la rotation dans cette direction est limitée.

9. Dispositif de pulvérisation (41) selon l'une quelconque des revendications précédentes 2-8, **caractérisé en ce que** la troisième lame (43) est fixée à l'élément de suspension de liaison (7) par l'intermédiaire de porte-buses (17).
